Europäisches Patentamt

**European Patent Office**

**Office européen des brevets**

(19)

(11) Veröffentlichungsnummer: **0 012 237**
A1

# (12) EUROPÄISCHE PATENTANMELDUNG

(21) Anmeldenummer: **79104539.6**

(22) Anmeldetag: **16.11.79**

(51) Int. Cl.³: **B 25 J 9/00, B 25 J 11/00**

(30) Priorität: **07.12.78 DE 2852821**

(43) Veröffentlichungstag der Anmeldung: **25.06.80**
**Patentblatt 80/13**

(84) Benannte Vertragsstaaten: **AT BE CH DE FR GB IT LU NL SE**

(71) Anmelder: **Walter Reis GmbH & Co, Im Weidig 1-4, D-8753 Obernburg (DE)**

(72) Erfinder: **Pfenning, Udo, Bayernstrasse 17, D-8753 Obernburg (DE)**

(74) Vertreter: **Gudel, Diether, Dr Patentanwälte Dipl.-Ing. P. Wirth Dipl.-Ing. G. Dannenberg et al, Dr. V. Schmied-Kowarzik Dr. P. Weinhold, Dr. D. Gudel Grosse Eschenheimer Strasse 39, D-6000 Frankfurt/Main (DE)**

(54) **Programmgesteuerter Manipulator.**

(57) Beschrieben wird ein programmgesteuerter Manipulator mit einem Grundgestell (1) mit einer Hubsäule (2) und einem um die vertikale Achse der Hubsäule schwenkbaren und in der Höhe verfahrbaren Arm (4), an dessen Ende ein Greifer (9) angeordnet ist, wobei der Arm (4) an seinem inneren Ende an einem an der Hubsäule (2) verfahrbaren Schlitten (3) um eine vertikale Achse (8) schwenkbar angelenkt ist und zwischen sich und dem Greifer (9) mindestens zwei weitere Schwenkarme (5, 6) mit jeweils vertikaler Schwenkachse (7, 7) trägt, die jeweils um einen vollen Winkel schwenkbar sind.

## Beschreibung

Die Erfindung betrifft einen programmgesteuerten Manipulator mit einem Grundgestell mit einer Hubsäule und einem um die vertikale Achse der Hubsäule schwenkbaren und in der Höhe verfahrbaren Arm, an dessen Ende ein Greifer angeordnet ist.

Einen derartigen Manipulator beschreibt die DE-PS 2 008 790. Dort ist ein einziger, gerader Arm vorgesehen, an dessen freiem Ende über einen Antrieb eine Spindel mit einer vertikalen Achse drehbar befestigt ist. Am Ende trägt die Spindel einen Greifer. Zusätzlich zu den hiermit erzielbaren drei Freiheitsgraden können nach einem Vorschlag dieser Druckschrift weitere Bewegungskoordinaten vorgesehen sein, um zusätzliche Freiheitsgrade zu schaffen. Ein konstruktiver Vorschlag zur Vergrösserung der Zahl der Freiheitsgrade ist der Druckschrift nicht zu entnehmen.

Die DE-AS 1 481 819 beschreibt einen ferngesteuerten Manipulator, bei dem ein vertikales Teleskoprohr vorgesehen ist, an dessen unterem Ende mit einer horizontalen Achse ein erster Arm schwenkbar befestigt ist. Dieser Arm trägt über horizontale bzw. vertikale Schwenkachsen weitere Arme, wobei am Ende des jeweils äussersten Armes ein Greifer vorgesehen ist. Auch mit diesem Manipulator lässt sich keine nahezu kreisförmig geschlossene Fläche um das Teleskoprohr herum mit dem Greifer bestreichen.

Die ältere deutsche Patentanmeldung P 28 01 348.1 beschreibt einen programmgesteuerten Manipulator, bei dem an einer horizontalen Führung ein Schlitten verfahrbar ist, an dem eine Reihe von in einer Seitenansicht jeweils abgeknickten Armen mit jeweils vertikalen Schwenkachsen befestigt ist. Am äussersten Arm ist wiederum ein Greifer befestigt, und zwar mit einer horizontalen Schwenkachse. Zum einen ist

0012237

- 2 -

hierbei die vom Greifer überstreichbare Höhe relativ begrenzt, und zwar weil dies über eine Schwenkung des Armes um die horizontale Achse erreicht werden muss. Zum anderen sind die Arme nicht jeweils um einen vollen Winkel schwenkbar, und zwar weil sie dabei an den jeweils vorhergehenden Arm anstossen.

Die FR-PS 2 040 588 beschreibt einen Manipulator, bei dem an einem gehäusefesten, schräg nach unten weisenden Arm über jeweils horizontale Schwenkachsen weitere, etwa gleich lange Arme befestigt sind, deren äusserster Arm einen Greifer trägt. Jeder Arm ist dabei auf den ihn tragenden Arm aufgesetzt, so dass die Arme jeweils um einen vollen Winkel verschwenkt werden können. Ein schwereloses Programmieren ist mit diesen Armen aber nicht möglich.

Die Zeitschrift "Kerntechnik" 10, (1968) Nr. 2, Seite A22 und 23 zeigt eine Abbildung eines fernbetätigten Manipulators mit zwei angetriebenen Armen mit horizontalen Schwenkachsen, wobei am Ende des äussersten Armes wiederum ein Greifer, ebenfalls mit horizontaler Schwenkachse, befestigt ist. Die Arme können aber ebenfalls nicht um einen vollen Winkel verschwenkt werden, weil sie nämlich an das Grundgehäuse des Manipulators dabei anstossen. Auch Auch mit diesem Manipulator lässt sich keine praktisch schwerkraftlose Programmierung durchführen.

Die GB-PS 1 479 811 beschreibt eine Tragvorrichtung für zu montierende Gegenstände, wobei an einer vertikalen Säule mehrere Arme mit jeweils vertikalen Schwenkachsen angelenkt sind. Am Ende des äussersten Armes befindet sich ein Hebezeug. Die Arme sind nicht angetrieben. Sie sind etwa gleich lang, so dass auch hiermit keine nahezu kreisförmig geschlossene Fläche überstrichen werden kann.

Ausgehend von einem programmgesteuerten Manipulator der eingangs genannten Art liegt der Erfindung die Aufgabe zugrunde, diesen so auszugestalten, daß ein schwereloses Programmieren in der Ebene innerhalb einer nahezu kreisförmig geschlossenen Fläche um die Hubsäule herum möglich ist.

Zur Lösung dieser Aufgabe ist die Erfindung dadurch gekennzeichnet, daß der Arm an seinem inneren Ende an einem an der Hubsäule verfahrbaren Schlitten um eine vertikale Achse schwenkbar angelenkt ist und daß er zwischen sich und dem Greifer mindestens zwei weitere Schwenkarme mit jeweils vertikaler Schwenkachse trägt, die jeweils um einen vollen Winkel schwenkbar sind.

Durch diese Merkmale kann der Manipulator in der durch die Höhe des Schlittens an der Hubsäule definierten Ebene schwerelos programmiert werden, und zwar in einer nahezu kreisförmig geschlossenen Fläche um die Hubsäule herum. Die Steuerung erfolgt über eine Speichersteuerung mit der Möglichkeit des gleichzeitigen Betriebs von mindestens drei Bewegungen. Dies erlaubt, daß im gesamten Arbeitsraum des Manipulators jeder beliebige Punkt mit vier Achsen angefahren werden kann. Wenn der Greifer eine zusätzliche Drehachse hat, kann jede Position des Greifers im gesamten Greiferbereich erreicht werden. Fernerhin können gleichzeitig mehrere Schwenkbewegungen durchgeführt werden, was zu einem außerordentlich kurzen Zeitbedarf für die Bewegung des Greifers von Position zu Position führt, da Hindernisbetrachtungen nur noch begrenzt notwendig sind. Die Programmierung des Manipulators erfolgt im Nachführverfahren durch Entsperrung der Antriebselemente der Arme, so daß dadurch ein spielend leichtes Bewegen des Greifers in der jeweils gewünschten Bahn möglich ist. Lediglich zur Bewegung in der Vertikalen müssen Antriebskräfte von einem geeigneten Motor zu Hilfe genommen werden. Es ergibt sich dadurch eine sehr einfache Nachführprogrammierung, wodurch sich neue Einsatzgebiete des Manipulators eröffnen. Das Programmieren des Manipulators auf den jeweils gewünschten, optimalen Bewegungsablauf erfolgt ähnlich wie eine entsprechende manuelle Betätigung.

Wichtig ist es hierzu, daß die Arme gerade ausgebildet sind, so daß sie sich bei ihrer Verschwenkung gegenseitig nicht behindern.

Zu demselben Zweck ist ferner vorgesehen, daß jeder der weiteren Schwenkarme kürzer ist als der ihn tragende Schwenkarm.

Für die meisten Einsatzgebiete ist es vorteilhaft, wenn jeder der weiteren Schwenkarme auf die Unterseite des ihn tragenden Schwenkarmes aufgesetzt ist. Unterhalb des Greifers gibt es bei dieser bevorzugten Anordnung keine Schwenkarme. Es ist aber auch die umgekehrte Anordnung möglich, bei der die weiteren Schwenkarme jeweils auf die Oberseite des ihn tragenden Schwenkarmes aufgesetzt sind.

Die Erfindung wird im folgenden anhand von Ausführungsbeispielen näher erläutert. Es zeigt:

Fig. 1    perspektivisch eine Ansicht einer ersten Ausführungsform des Manipulators;

Fig. 2    eine Draufsicht auf den Manipulator nach Fig. 1 mit Darstellung der Schwenkbereiche der Schwenk-arme;

0012237

Fig. 3    eine Seitenansicht einer zweiten Ausführungsform des neuartigen Manipulators.

Ein Gestell 1 ist ortsfest oder auf Schienen verfahrbar auf dem Boden einer Halle aufgestellt. Am Gestell sind zwei zueinander parallele Führungsstangen befestigt, die eine Hubsäule 2 ausbilden und einen Schlitten 3 führen. Dieser kann über einen geeigneten Antrieb in der Höhe verfahren werden.

Am Schlitten 3 sitzen mehrere Schwenkarme 4, 5, 6. Alle Arme sind mit lotrechten Schwenkachsen 7 aneinander angelenkt. Der innerste Arm 4 ist mit einer ebenfalls lotrechten Schwenkachse 8 am Träger 3 schwenkbar gelagert. Der äußerste Arm 6 trägt an seinem freien Ende einen Greifer 9, der um eine horizontal verlaufende Schwenkachse 10 um wenigstens 180° schwenkbar ist. Alle Schwenkbewegungen und auch die Höhenverstellung des Trägers 3 erfolgen über geeignete und von einer Speichersteuerung gesteuerte Antriebe.

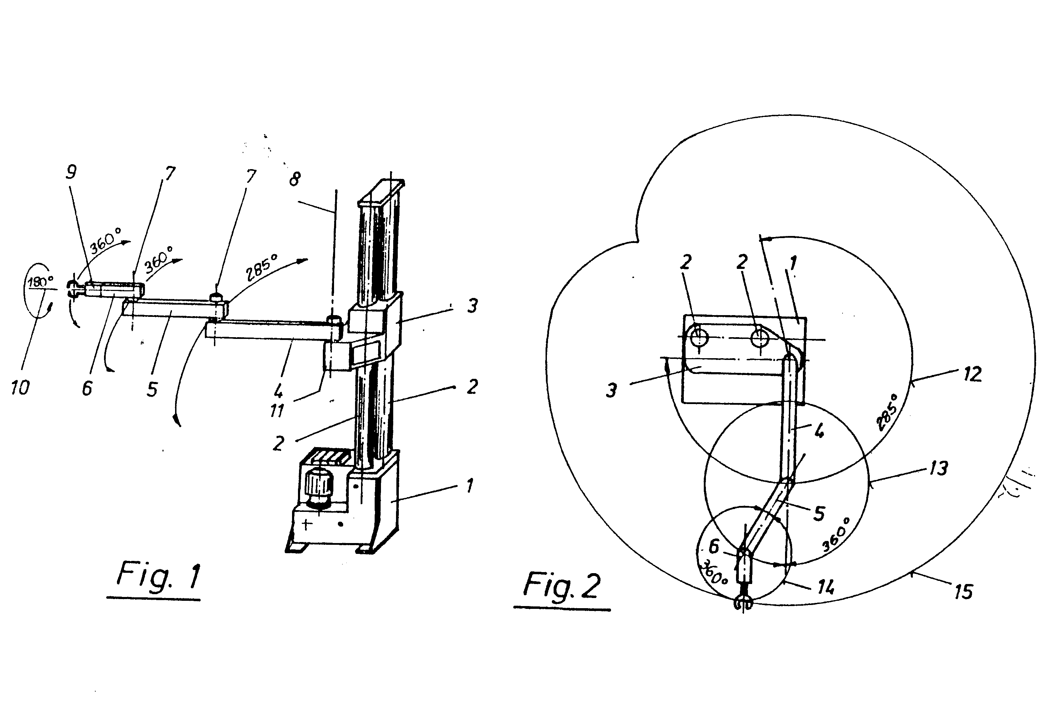

Insbesondere Figur 2 läßt erkennen, daß der innerste Arm 4 beim gezeigten Ausführungsbeispiel um einen Winkel von etwa 285° schwenkbar ist. Der volle Winkel von 360° wird wegen der Führungsstangen bzw. des Schlittens 3 nicht erreicht. Zur Erhöhung des Schwenkwinkels sitzt der innerste Arm 4 an einem Vorsprung 11 des Schlittens 3.

Die weiteren Schwenkarme 5, 6 sind jeweils um Winkel von 360° schwenkbar. Der Schwenkbereich des innersten Armes 4 ist in Fig. 2 mit Pos. 12 bezeichnet. Die Schwenkbereiche der weiteren Schwenkarme 5 und 6 sind mit Pos. 13 bzw. 14 bezeichnet. Es ergibt sich ein gesamter Schwenkbereich 15, der einen praktisch kreisförmigen, vollen Winkel einschließt.

An einem Einsatzgebiet soll der neuartige Manipulator weiter erläutert werden. In der Druckgrußfertigung sind die Gießmaschinen üblicherweise so aufgestellt, daß parallel zwischen den einzelnen Gießplätzen lediglich so viel Zwischenraum ist, wie er zur Bedienung der Maschinen, bei manueller Betriebsweise, notwendig ist. Durch Rationalisierungszwänge ist es oft notwendig, weitere Folgeoperationen, wie Entgraten, Polieren, Bohren, Gewindeschneiden und ähnliche Arbeitsgänge an den gegossenen Druckgußstücken direkt und automatisch vorzunehmen. Die bekannten Manipulatoren können diese Aufgabe nur lösen, wenn der Raum zwischen den einzelnen Gießmaschinen drastisch erweitert wird, wodurch die Kapazität der Fabrikationshallen oft um 50 % gemindert wird.

Mit dem neuartigen Manipulator ist es ohne weiteres möglich, trotz gegebenenfalls enger Raumverhältnisse eine wünschenswerte Rationalisierung durch Kombinierung der nachfolgenden Fertigungsgänge durchzuführen.

Die Steuerung der Vorrichtung erfolgt über eine Speichersteuerung mit der Möglichkeit des gleichzeitigen Betriebs von mindestens drei Bewegungen. Dies erlaubt, daß im gesamten Arbeitsraum des Manipulators jeder beliebige Punkt mit vier Achsen angefahren werden kann, und daß bei Ausrüstung des Greifers mit einer Rotationsachse jede Position des Greifers in dem gesamten Greiferbereich darüber hinaus in beliebig geschwenkter Lage des Greifers erreicht werden kann.

Die vorbeschriebene Anordnung der Schwenkarme erlaubt es ebenfalls, daß gleichzeitig mehrere Schwenkbewe-

0012237

gungen gefahren werden können, was zu einem außerordentlich kurzen Zeitbedarf von Position zu Position führt, da Hindernisbetrachtungen nur noch begrenzt notwendig sind.

Durch die beschriebene Anordnung wird außerdem der Vorteil erreicht, daß bei der Programmierung des Manipulators im Nachführverfahren durch Entsperrung der Antriebselemente ein spielend leichtes Bewegen des Greifers der gewünschten Bahn möglich ist und lediglich zur Bewegung in der Vertikalen hydraulische, pneumatische oder elektrische Kräfte zu Hilfe genommen werden müssen. Durch diese sehr einfache Nachführprogrammierung eröffnen sich neue Einsatzgebiete. Die Programmierung kommt der Handhabung bei einer manuellen Führung des Greifers gleich.

In der Praxis wird man mit drei bis fünf Schwenkarmen zuzüglich der Höhenverstellbarkeit des Schlittens 3 auskommen.

Anstelle des Greifers 9 können auch andere Elemente dort vorgesehen sein, beispielsweise eine Schweißzange, ein Sauger für den Vakuumtransport und dergleichen.

Der Antrieb für die Schwenkbewegungen kann im Schlitten 3 untergebracht sein, wodurch sich der Vorteil von geringen gesteuert zu bewegenden Massen in den Schwenkarmen ergibt. Die Steuerung wird aber wegen Verkürzung der Antriebsleitungen präziser, wenn die Antriebe für die gesteuerte Bewegung der Schwenkarme in den Gelenken vorgesehen sind.

Der Antrieb für die Höhenverstellung des Schlittens 3 ist entweder im Schlitten selbst oder im Gestell 1 untergebracht.

Wichtig ist es, daß die Arme derart ausgebildet und angeordnet sind, daß sie sich bei ihrer gegenseitigen Verschwenkung nicht behindern, so daß jeder Schwenkarm - gegebenenfalls mit Ausnahme des innersten Schwenkarmes - um einen vollen Winkel schwenkbar ist. Alle Schwenkarme, ggf. mit Ausnahme des innersten Schwenkarmes, sind beliebig oft um ihre Achsen drehbar. Es kann daher jede Position, je nach den günstigsten Raumverhältnissen, wahlweise von beiden Seiten her angefahren werden, was ebenfalls bei vielen Anwendungsfällen vorteilhaft ist. Wenn der innerste Schwenkarm 4 auf einer Erhöhung am Schlitten 3 angebracht ist, so kann auch dieser Schwenkarm um wenigstens 360$^{\circ}$ verschwenkt werden.

Sind die Schwenkarme wie in Fig. 1 gezeigt übereinander gesetzt, so überstreicht der Greifer auch die Grundfläche des Grundgestells 1.

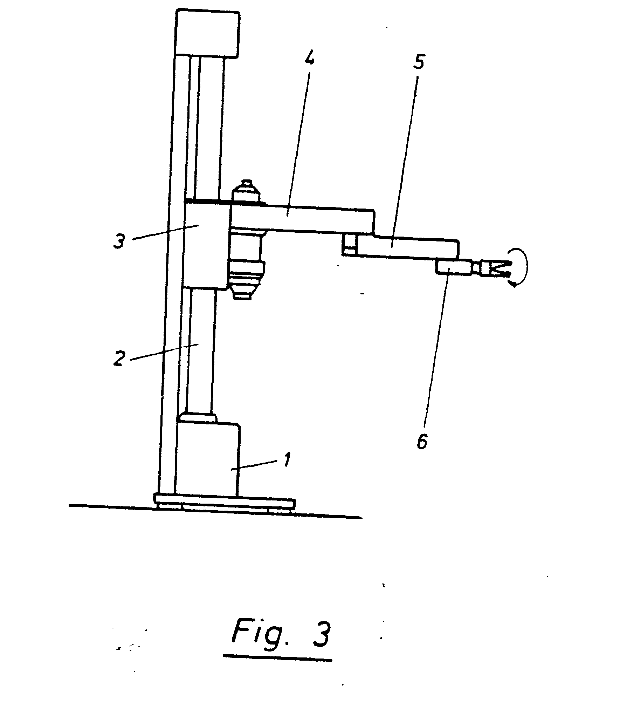

Bei der in Fig. 3 gezeigten Ausführungsform sind die Schwenkarme jeweils auf die Unterseite des vorhergehenden Armes aufgesetzt, so daß sich unterhalb der horizontalen Ebene, die durch den Greifer 9 geht, keine Schwenkarme befinden.

0012237

## Patentansprüche

1. Programmgesteuerter Manipulator mit einem Grundgestell mit einer Hubsäule und einem um die vertikale Achse der Hubsäule schwenkbaren und in der Höhe verfahrbaren Arm, an dessen Ende ein Greifer angeordnet ist,

d a d u r c h   g e k e n n z e i c h n e t ,

daß der Arm (4) an seinem inneren Ende an einem an der Hubsäule (2) verfahrbaren Schlitten (3) um eine vertikale Achse (8) schwenkbar angelenkt ist und daß er zwischen sich und dem Greifer (9) mindestens zwei weitere Schwenkarme (5, 6) mit jeweils vertikaler Schwenkachse (7, 7) trägt, die jeweils um einen vollen Winkel schwenkbar sind.

2. Programmgesteuerter Manipulator nach Anspruch 1,

d a d u r c h   g e k e n n z e i c h n e t ,

daß jeder der weiteren Schwenkarme (5, 6) auf die Unterseite des ihn tragenden Schwenkarmes (4, 5) aufgesetzt ist.

3. Programmgesteuerter Manipulator nach einem der vorhergehenden Ansprüche,

d a d u r c h   g e k e n n z e i c h n e t ,

daß jeder der weiteren Schwenkarme (5, 6) kürzer ist als der ihn tragende Schwenkarm (4, 5).

0012237

4. Programmgesteuerter Manipulator nach einem der vorhergehenden Ansprüche,

d a d u r c h  g e k e n n z e i c h n e t ,

daß alle Schwenkarme (4, 5, 6) gerade ausgebildet sind.

*Fig.2*

*Fig. 1*

0012237

Walter Reis GmbH & Co.

0012237

_Fig. 3_

Walter Reis GmbH & Co.

**Europäisches Patentamt**

**EUROPÄISCHER RECHERCHENBERICHT**

0012237

Nummer der Anmeldung

EP 79 10 4539

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 101 097 (GACON-CAMOZ)<br>* Seite 7, Zeilen 22-35; Abbildung 5 * | 1,3,4 |
| | -- | |
| | GB - A - 1 395 058 (SAHLIN AUTO-MATION LTD.)<br>* Ansprüche 1,2; Seite 2, Zeilen 25-32 * | 1,2,4 |
| | -- | |
| | DE - C - 800 032 (MOHN)<br>* Anspruch 1 * | 1 |
| | -- | |
| A | FR - A - 1 341 678 (COMPAGNIE DE SAINT GOBAIN)<br>* Seite 2, Spalte 2, Zeilen 8-36 * | 1,2,4 |
| | -- | |
| AD | GB - A - 1 479 811 (CETEC DRESSLER)<br>* Anspruch 3 * | 1,2,4 |
| | -- | |
| | DE - A - 2 224 349 (PIETZSCH)<br>* Seite 7, Zeilen 19-26; Abbildung 6 * | 3,4 |
| | -- | |
| AP | EP - A - 0 000 877 (GRISEBACH)<br>* Abbildungen 4-7 * | 1-4 |
| | -- | |
| AD | DE - A - 1 918 745 (AIDA TEKKOSHO) | 1,3,4 |
| | ---- | |

**KLASSIFIKATION DER ANMELDUNG (Int.Cl. 3)**

B 25 J 9/00
11/00

**RECHERCHIERTE SACHGEBIETE (Int. Cl. 3)**

B 25 J 9/00
11/00
B 65 G 47/90
57/03
B 66 C 23/00
23/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prufer |
|---|---|---|
| Den Haag | 07-03-1980 | LAMMINEUR |

EPA form 1503.1 06.78